# EUROPEAN PATENT APPLICATION

(11) **EP 0 976 936 A1**
(43) Date of publication of application: **02.02.2000**
(21) Application number: 99305644.9
(22) Date of filing: 16.07.1999
(51) Int. Cl.: F16B 45/02

(54) **Improvements in and relating to karabiners**

(30) Priority: 29.07.1998 GB 9816418
(71) Applicant: DMM Engineering Limited, Llanberis, Gwynedd, LL55 4EL (GB)
(72) Inventor: Hall, Frederick Allan, Gwynedd (GB)
(74) Representative: Lyons, Andrew John

(57) **Abstract**

A karabiner comprises a ring (18) having a gate (20), whereby items can be passed through the gate to be retained within the ring, the karabiner having a locking component (50) attachable over the gate and another part of the ring spaced from the gate.

## Description

The present invention relates to an improved karabiner.

Karabiners are used for various applications in the pursuit of rock climbing and mountaineering, their usual function is to act as a connector between other components used in the safety system. Generally, the karabiner is in the form of a ring which may be opened to pass a belay device such as a loop attached to the harness therethrough and for attachment of a "figure of 8" or other type of belay device. The karabiner is then shut by means of a spring-loaded gate which may be further secured by a locking thimble.

A problem which may arise with the aforementioned assembly is that the biner may rotate in use, either during belaying or abseiling, to a potentially unsafe position. The rope and/or belay tool may become positioned across the karabiner thereby compromising the maximum strength of the karabiner. The rope or belay tool may be positioned across the locking gate of the karabiner which reduces the safety of the device since the weight exerted on the rope and tool will be across the weakest point of the karabiner.

It is known to fit the karabiner to the harness by means of a pin driven therethrough. This does prevent rotation of the biner but has the drawback of permanently attaching the biner to the rope or belay loop. This is undesirable because the user generally wishes to remove the karabiner after belaying so that it does not obstruct the user during climbing.

It is an object of the present invention to provide an improved karabiner which aims to overcome the abovementioned drawbacks.

Accordingly, the present invention provides a karabiner of the type comprising a ring having a gate, whereby items can be passed through the gate to be retained within the ring, the karabiner having a locking component attachable over the gate and another part of the ring spaced from the gate.

Preferably, each end of the locking component has an open-ended slot for fitting over the gate and a part of the ring spaced from the gate. Alternatively, the component may be provided with a cylindrical bore for attachment to the ring at a point spaced apart from the gate, the component being rotatable about the axis of the ring.

Preferably, the component is provided with a slot at each end which both open onto the same side of the component. The slots are preferably circular in cross-section. It is preferable to provide a component which has a wide-end and a narrow-end. Preferably, the slots have an open side with a width slightly less than the diameter of the slot. In this manner, the component may be snap-fitted onto the karabiner having the slot at the narrower end of the component fitted onto the long side of the karabiner opposite the gate side, with the slot of the wide-end being fitted over the gate.

It is preferable to provide a stepped slot for the wide-side to accommodate the width of a thimble which may be fitted over the gate to secure it further. The position of the step is preferably arranged such that the component may only be fitted over the gate when the thimble is in its locking position.

It is to be appreciated that the component may be permanently located on the karabiner on the non-gated side, being pivotable about the karabiner to lock and unlock the component over the gated side or may be snap-fitted onto one or both limbs of the karabiner. The locking component is preferably an injection moulded component, preferably being of a reinforced plastics material.

The locking component may be used in conjunction with any type of karabiner, including those having spring-loaded or "snap" gates or other types of locking gates, such as autolocks, bayonet gates, audtriplelocks. The component may be made to fit on to left- or right-handed karabiners.

The locking component may itself have a locking mechanism operable to prevent undesired release thereof.

This invention will now be further described, by way of example only, with reference to the accompanying drawings, in which:
Figure 1 shows a sit harness with integral belay loop used with a "figure 8" belay tool and a conventional locking gate karabiner;
Figure 2 shows a sit harness used with a "figure 8" belay tool and a conventional locking gate karabiner;
Figures 3 and 4 show how a conventional karabiner can rotate in use to potentially unsafe positions;
Figures 5A, B and C show a karabiner of the invention and its manner of use;
Figures 6A and B and 7A and B show respectively right and left hand versions of a karabiner of the invention used with a friction hitch; and
Figure 8 shows a karabiner of the invention used with a rope ascender.

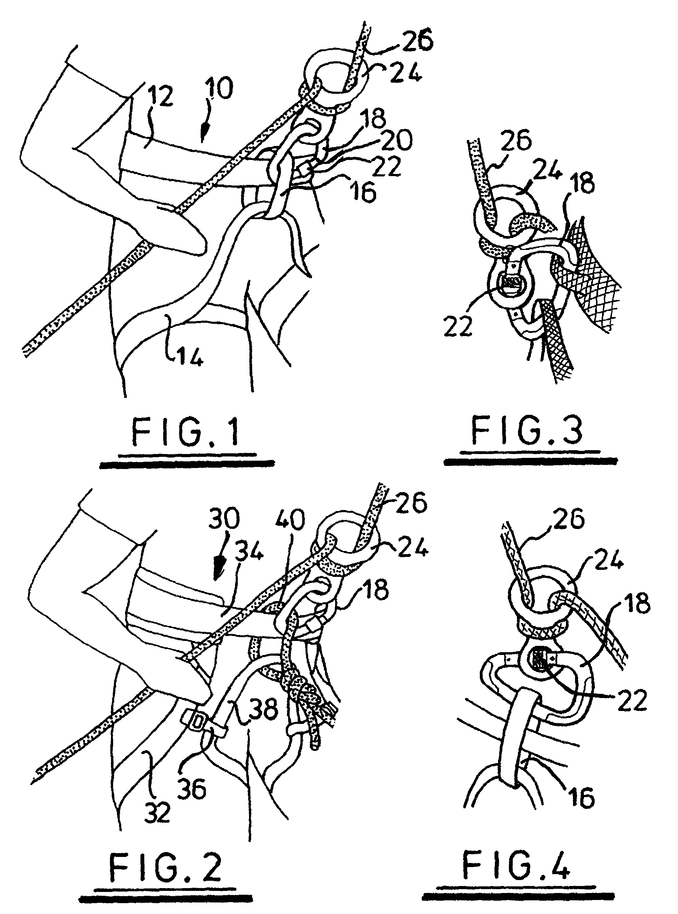

Referring to Figure 1 of the drawings, which describes the prior art, a climber is shown wearing a sit harness 10, which has a waist belt 12 and thigh straps 14 linked by a loop 16. To the loop 16 is attached a conventional karabiner 18 having a spring-loaded gate 20, which can be further secured by a locking thimble or autolock 22 on the gate. To the karabiner 18 is attached a "figure 8" belay tool 24 and a climbing rope 26 is looped through the belay tool 24.

In Figure 2 of the drawings, which also shows in prior art arrangement, the harness 10 is replaced by an Alpine style harness without integral belay loop 30, in which thigh straps are formed by a continuous web 32 connected at each end to waist belt 34 and which passes behind both thighs and at each thigh is connected to itself by fasteners 36, to form a loop 38 that is linked to the waist belt by a loop of a climbing rope 40. On the loop of the climbing rope is also a conventional karabiner 18 to which is attached a "figure 8" belay tool 24 and a climbing rope 26 is looped through the belay tool.

Figures 3 and 4 of the drawings, show by way of example problems that can arise with conventional karabiners used in the situation illustrated in Figures 1 and 2 of the drawings. In Figure 3 the karabiner 18 is able to rotate in use either during belaying or abseiling to a potentially unsafe position where the rope and/or the belay loop of the climbing harness is positioned across the karabiner, thereby comprising the maximum strength of the karabiner.

In Figure 4 the belay tool i.e. the "figure 8" tool is free to rotate in use either during belaying or abseiling to a potentially unsafe position where the tool is directly loading the gate thereby comprising the maximum strength of the karabiner.

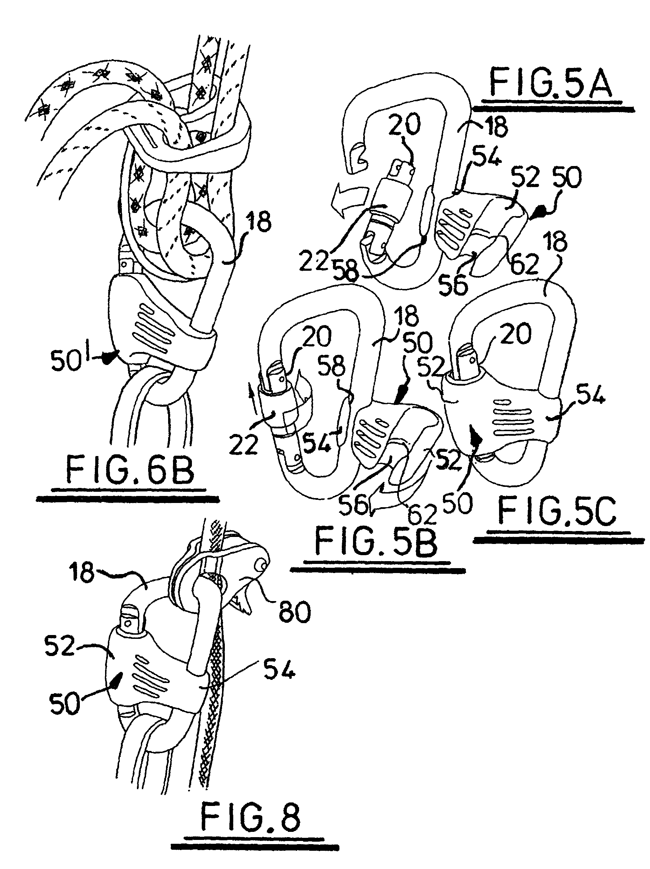

Figures 5A, B and C illustrate a karabiner according to the invention which has an additional safety component 50 moulded of plastics material. The basic karabiner is as described in connection with Figure 1 of the drawings. The safety component 50 has a wide-end 52 and a narrower end 54. At each end of the component is an open-sided slot 56, 58.

Both slots 56, 58 open onto the same side of the component. Each slot is of circular cross-section and its open side has a width slightly less than the diameter of the slot. Thus, the safety component can be snap-fitted onto the karabiner and rotated around a side of the karabiner.

It is generally intended that the slot 58 in the narrower end of the component will be fitted onto the long side of the karabiner opposite the gate side and that the slot 56 will fit onto the gate side. The gate side slot 56 is stepped at 62 to accommodate the width of the thimble 22. The position of the step 62 is arranged so that the safety component can only be fitted over the gate when the thimble is in its locking position.

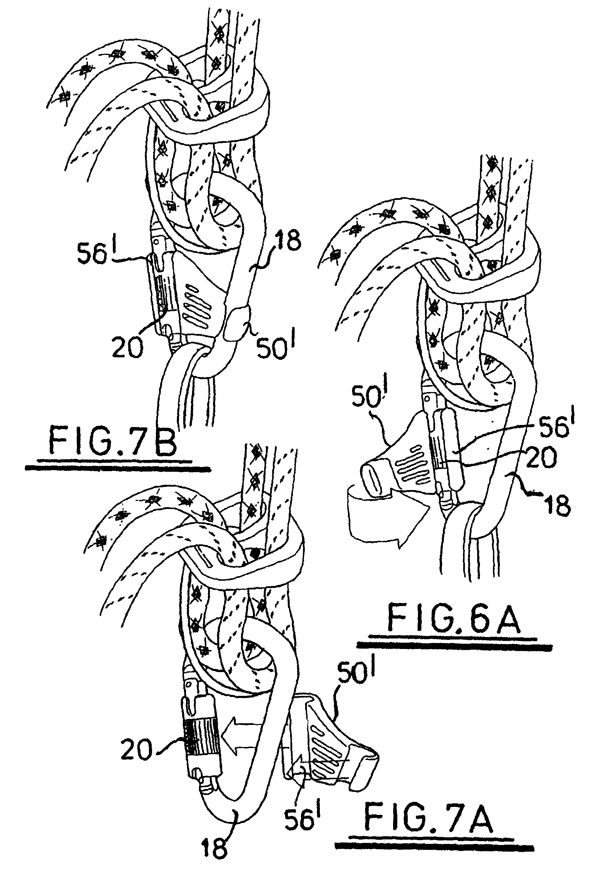

In Figures 6 and 7 a slight variation of safety component 50' is shown in which gate slot 56' is not stepped. That is for use on karabiners that do not have an autolock for the gate.

The safety component 50 may be operated in different ways. The component may be permanently located on the karabiner on the non-gated side, so that once the gate has been closed and locked the component can be pivoted around to locate over the gate (see Figures 5A to C).

The safety component acts to prevent the karabiner from rotating to an extent where a rope or a belay device was acting directly on the karabiner gate. The safety component further protects the gate and can prevent the gate from unlocking inadvertently.

The safety component may be a separate component that can be snap-fitted onto either limb of the karabiner first or even onto both at the same time (see Figures 6A/B and 7A/B respectively).

The safety component may be provided on a left or right handed component of Figure 6 with Figure 7.

The karabiner of the invention may be used with a sit harness and alpine style harnesses by allowing clipping onto single or twin rope (where the harness has no belay loop). The karabiner can be used where an Italian friction hitch 70 is used instead of a belay or an abseil device (see Figures 6 and 7).

Figure 8 shows the karabiner with safety component used with an ascender 80 on a single rope.

It is to be appreciated that the locking component may be attached to any type of karabiner to increase the safety thereof, for example in relation to climbing, industrial and yachting applications. The component not only prevents the rotation of the climbing rope and/or belay tool across the karabiner but increases the security of the gate by providing an additional lock to the gate and, optionally, the thimble. Furthermore, the locking component enables two ropes or harnesses to be held captive respectively in discrete areas.

## Claims

1. A karabiner of the type comprising a ring (18) having a gate (20), whereby items can be passed through the gate to be retained within the ring, the karabiner having a locking component (50) attachable over the gate and another part of the ring spaced from the gate.

2. A karabiner as claimed in claim 1, wherein the gate is spring-biased to a closed position.

3. A karabiner as claimed in claim 1 or 2, comprising a thimble (22) on the gate movable between a first position to lock the gate and a second position to unlock the gate.

4. A karabiner as claimed in claim 3, wherein the thimble is screw-threadedly movable along the gate.

5. A karabiner as claimed in any one of claims 1 to 4, wherein each end of the locking component has an open-ended slot (56, 58) for fitting over the gate and a part of the ring spaced from the gate respectively.

6. A karabiner as claimed in claim 5, wherein the open ended slots at each end both open onto the same side of the locking component.

7. A karabiner as claimed in any one of claims 1 to 4, wherein the locking component has an open-ended slot at one end, and a cylindrical bore at the other end for attachment to the ring at a point spaced apart from the gate, the locking component being rotatable about the axis of the ring.

8. A karabiner as claimed in claims 5, 6 or 7, wherein the or each slot has an open side with a width slightly less than the diameter of the slot to enable the locking component to be snap fitted onto the karabiner.

9. A karabiner as claimed in any one of claims 5 to 8, wherein the or each slot is circular in cross-section.

10. A karabiner as claimed in any one of claims 5 to 9, with claim 3, wherein the slot at the wide end of the locking component is stepped (62) to accommodate the width of the thimble fitted over the gate to secure it further.

11. A karabiner as claimed in claim 10, wherein the position of the step is arranged such that the locking component may only be fitted over the gate when the thimble is in its locking position/

12. A karabiner as claimed in any one of claims 1 to 11, wherein the locking component is injection-moulded from plastics material.

13. A karabiner as claimed in any one of claims 1 to 12, wherein the locking component is made from reinforced plastics material.
